(19) Europäisches Patentamt / European Patent Office / Office européen des brevets

(11) **EP 4 684 862 A1**

(12) **EUROPEAN PATENT APPLICATION**
published in accordance with Art. 153(4) EPC

(43) Date of publication:
**28.01.2026 Bulletin 2026/05**

(21) Application number: **24774404.8**

(22) Date of filing: **10.01.2024**

(51) International Patent Classification (IPC):
*B01D 39/16* [(2006.01)]     *D04H 3/14* [(2012.01)]
*D04H 3/153* [(2012.01)]     *D04H 3/16* [(2006.01)]

(52) Cooperative Patent Classification (CPC):
**B01D 39/16; D04H 3/14; D04H 3/153; D04H 3/16**

(86) International application number:
**PCT/JP2024/000289**

(87) International publication number:
**WO 2024/195258 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2023 JP 2023045819**

(71) Applicants:
• **JNC Corporation
Chiyoda-ku
Tokyo 100-8105 (JP)**

• **JNC FILTER CO., LTD.
Osaka-shi
Osaka 530-6108 (JP)**

(72) Inventor: **MINEO Ryota
Moriyama-shi, Shiga 524-0001 (JP)**

(74) Representative: **Becker, Eberhard
Becker Kurig & Partner
Patentanwälte mbB
Bavariastraße 7
80336 München (DE)**

(54) **DEPTH FILTER**

(57)     Provided is a depth filter that not only has excellent filtration precision even for a fluid having a wide particle distribution and exhibits excellent fine particle trapping performance, but also has high liquid permeability that allows filtration at a high flow rate while maintaining a low filtration pressure. This cylindrical depth filter comprises: a pre-filtration layer; and a precision filtration layer disposed on the downstream side of the pre-filtration layer in the filtration direction. The depth filter is formed by winding a mixed-fiber nonwoven fabric, which comprises a melt-blown fiber A and a melt-blown fiber B having a lower melting point than the same, and a single-fiber nonwoven fabric, which has an average fiber diameter of less than 1 $\mu$m but not less than 0.1 $\mu$m and a fiber diameter variation coefficient of 3.0 or less. The filter is provided with a gradient, in which the average fiber diameter of the mixed-fiber nonwoven fabric decreases from the pre-filtration layer toward the precision filtration layer. At least a portion of the single-fiber nonwoven fabric is wound so as to overlap with the mixed-fiber nonwoven fabric that constitutes the precision filter layer.

EP 4 684 862 A1

## Description

Technical Field

The present invention relates to a depth filter for filtering fluid containing fine particles.

Related Art

In recent years, electronic devices have needs for high performance and miniaturization, so built-in electronic components are required to have low profiles, and thus, each constituent member tends to become thinner and multi-layered. In the case of the presence of foreign matter with large particle diameter relative to the thinness of members, thickness uniformity is impaired, so coarse particles are removed by filtration in processes before processing and molding. Furthermore, since members tend to become thinner and the particle diameter considered as coarse particles has become smaller than before, situations where high-precision depth filters are used are increasing.

On the other hand, since members are made into compositions by mixing various raw materials, foreign matter of various particle diameters is contained, and the particle distribution tends to be wide.
In the case of filtering fluid containing compositions with such wide particle distribution using high-precision filters aimed at trapping fine particles, the rise in filtration pressure is rapid, and high filtration pressure applied to the filter makes push out more likely to occur, where particles trapped in the filter medium flow out. Furthermore, in the case of continuing filtration and rising filtration pressure, there is a problem that the filter medium itself collapses and trapped foreign matter leaks out. Generally, the higher the precision of a filter, the lower the pressure resistance performance tends to be, and the above-mentioned phenomena are more likely to occur, so attention must be paid to the end point of filtration, making filtration process management very troublesome for operators. To avoid high filtration pressure, the flow rate may be reduced, but in such a case, the processing amount per hour also decreases, so there is a problem that productivity becomes low. Thus, in conventional high-precision depth filters, problems due to high filtration pressure occur.

To solve these problems, various depth filters have been developed. For example, multi-stage layer type depth filters that trap fine particles while filtering fluid with wide particle distribution, with nonwoven fabric made of coarse fibers wound on the outside and ultrafine fibers wound on the inside, and multi-layer type depth filters having continuous fiber diameter gradients have been proposed (Patent Document 1). Since coarse particles are trapped on the outside and particles and gels finer than the coarse particles are trapped on the inside, such multi-layer type depth filters have been intended to achieve high-precision filtration while relatively suppressing the rise in filtration pressure.

However, in filtering recent filtration target materials that have high concentration and high viscosity, the current situation is that conventional depth filters cannot cope, and filters that enable high-precision filtration even for fluid with wide particle distribution and have low pressure loss are desired.

Citation List

Patent Document

Patent Document 1: International Publication No. 1998/013123.

SUMMARY OF INVENTION

Technical Problem

In view of this situation, the present invention has an object to provide a depth filter that has excellent filtration precision even for fluid with wide particle distribution, not only has excellent trapping performance for fine particles, but also has high liquid permeability and may perform filtration at high flow rate while maintaining low filtration pressure.

Solution to Problem

The present inventors, in addressing the above problems, found that by using mixed-fiber nonwoven fabric in which the fiber diameter is changed to become continuously finer from the pre-filtration layer to the precision filtration layer between the filter medium layers to increase the fiber diameter gradient, and the basis weight is changed to become continuously lower, and further by using in combination a single-fiber nonwoven fabric having fine and uniform fiber diameter, filtration pressure may be kept low while maintaining high filtration precision, and completed the present invention.

That is, the present invention has the following configurations.

[1] A depth filter, which is a cylindrical depth filter including a pre-filtration layer and a precision filtration layer disposed on a downstream side in a filtration direction of the pre-filtration layer,

in which the depth filter is formed by winding a mixed-fiber nonwoven fabric composed of a melt-blown fiber A made of a thermoplastic resin A and a melt-blown fiber B made of a thermoplastic resin B having a melting point lower than the thermoplastic resin A, and a single-fiber nonwoven fabric having an average fiber diameter of less than 1 μm and 0.1 μm or more, and a coefficient of variation of fiber diameter of 3.0 or less,

the pre-filtration layer is a layer in which the mixed-fiber nonwoven fabric having an average fiber diameter of 20 μm or less and 1 μm or more is wound,

the precision filtration layer is a layer in which the mixed-fiber nonwoven fabric having an average fiber diameter of less than 1 μm and 0.1 μm or more is wound,

a gradient is provided in which an average fiber diameter of the mixed-fiber nonwoven fabric continuously decreases from the pre-filtration layer toward the precision filtration layer, and at least a part of the single-fiber nonwoven fabric is wound to overlap with a mixed-fiber nonwoven fabric constituting the precision filtration layer.

[2] The depth filter according to [1], in which a gradient is provided in which an average basis weight of the mixed-fiber nonwoven fabric continuously decreases in a range from 100 g/m$^2$ to 1 g/m$^2$ from the pre-filtration layer toward the precision filtration layer.

[3] The depth filter according to [2], in which a support layer is provided that is formed by continuously increasing an average fiber diameter and increasing an average basis weight toward an inner peripheral portion beyond a precision filtration layer.

[4] The depth filter according to any one of [1] to [3], in which the mixed-fiber nonwoven fabric is thermally bonded between layers that are wound.

[5] The depth filter according to any one of [1] to [4], including a mixed-fiber nonwoven fabric having an average basis weight of 20 g/m$^2$ or less.

[6] The depth filter according to [1], in which the thermoplastic resin A is polypropylene having a melt flow rate of 500 g/10 min or more and a melting point of 160°C or more, and the thermoplastic resin B has a melting point of 150°C or less.

[7] The depth filter according to [6], in which the thermoplastic resin B is a propylene copolymer.

[8] The depth filter according to [7], in which the polypropylene is polypropylene polymerized from a metallocene catalyst.

[9] The depth filter according to [1] to [8], in which the single-fiber nonwoven fabric is a laminate of two or more layers.

Effects of Invention

According to the present invention, filtration may be performed with high precision and low filtration pressure for fluids having a wide particle distribution containing fine particles of various sizes. Since the filter medium has low pressure drop, filtration at high flow rate is also possible, and furthermore, since the filter medium has high pressure resistance even under high filtration pressure, high productivity and stable filtration may be achieved in fluid filtration. The depth filter of the present invention may be applied to fluids under various conditions such as fluids having a wide particle distribution containing fine particles of various sizes, and thus is a filter with excellent usability for filtration operators. Furthermore, since the depth filter of the present invention has high pressure resistance of the filter medium itself, collapse of the filter medium and push out are unlikely to occur even in the case of increased filtration pressure, resulting in high reliability as a filter.

DESCRIPTION OF EMBODIMENTS

The depth filter of the present invention is a cylindrical depth filter including a pre-filtration layer and a precision filtration layer disposed on a downstream side in a filtration direction of the pre-filtration layer, which is formed by winding a mixed-fiber nonwoven fabric composed of a melt-blown fiber A made of a thermoplastic resin A and a melt-blown fiber B made of a thermoplastic resin B having a melting point lower than the thermoplastic resin A, and a single-fiber nonwoven fabric having an average fiber diameter of less than 1 μm and 0.1 μm or more, and a coefficient of variation of fiber diameter of 3.0 or less.

Specifically, the depth filter of the present invention is formed into a cylindrical shape by inserting a single-fiber nonwoven fabric on a mixed-fiber nonwoven fabric obtained by a melt-blown method or the like, and winding and fixing these to a core material in a thermally melted state. The pre-filtration layer in the present invention is a layer in which the mixed-fiber nonwoven fabric having an average fiber diameter of 20 μm or less and 1 μm or more is wound, the precision filtration layer is a layer in which the mixed-fiber nonwoven fabric having an average fiber diameter of less than 1 μm and 0.1 μm or more

is wound, and a gradient is provided in which an average fiber diameter of the mixed-fiber nonwoven fabric continuously decreases from the pre-filtration layer toward the precision filtration layer.

Furthermore, at least a part of the single-fiber nonwoven fabric having a specific average fiber diameter and coefficient of variation of fiber diameter is wound to overlap with the mixed-fiber nonwoven fabric constituting the precision filtration layer (that is, the mixed-fiber nonwoven fabric having an average fiber diameter of less than 1 $\mu$m and 0.1 $\mu$m or more).

In the present invention, the pre-filtration layer is installed on the upstream side in filtration and is a portion that traps coarse particles. The precision filtration layer is installed on the downstream side in filtration and is a portion that traps minute particles and gel particles that are not trapped by the pre-filtration layer. In the depth filter having such a structure, a single-fiber nonwoven fabric having a fine and uniform fiber diameter is wound so as to overlap with the mixed-fiber nonwoven fabric constituting the precision filtration layer, thereby providing an extremely excellent effect of trapping minute particles. Furthermore, a support layer may be provided on the downstream side of the precision filtration layer as necessary. The support layer is provided to maintain the shape of the precision filtration layer and prevent the filter medium from falling off from the precision filtration layer.

The depth filter of the present invention is not particularly limited as long as a gradient is provided in which the average fiber diameter of the mixed-fiber nonwoven fabric continuously decreases from the pre-filtration layer toward the precision filtration layer, but the average fiber diameter ratio is preferably 2 to 30 times, more preferably 3 to 25 times, and even more preferably 5 to 20 times. In the case of the average fiber diameter ratio being 2 times or more, slurry having a wide particle distribution may be efficiently filtered through the entire thickness of the filter medium, and in the case of the average fiber diameter ratio being 30 times or less, pores formed between fibers do not become excessively large, and useless fibers that do not contribute to filtration may be reduced. It is noted that the average fiber diameter ratio refers to the ratio of average fiber diameters between the layer having the maximum average fiber diameter in the pre-filtration layer and the layer having the minimum average fiber diameter in the precision filtration layer (average fiber diameter of the layer having the maximum average fiber diameter in the pre-filtration layer/average fiber diameter of the layer having the minimum average fiber diameter in the precision filtration layer).

The depth filter of the present invention is not particularly limited, but it is preferable that a gradient is provided in which the average basis weight of the mixed-fiber nonwoven fabric continuously decreases from the pre-filtration layer toward the precision filtration layer. Specifically, the ratio between the average basis weight near the maximum of the pre-filtration layer and the average basis weight near the minimum of the precision filtration layer is 1.2 times or more, preferably 1.5 times or more, more preferably 1.8 times or more, and even more preferably 2 times or more. By being in this range, the effects of the present invention may be easily obtained. Such a depth filter changes so that the basis weight gradually decreases together with the fiber diameter between the filter medium layers from the pre-filtration layer to the precision filtration layer, so pressure loss is less likely to occur and fluid flows smoothly, and furthermore, coarse particles are efficiently depth-filtered between the filter medium layers. Furthermore, since fibers are bonded together by the melt-blown fiber B having a low melting point, push out is less likely to occur during high filtration pressure, and as a result, high filtration precision may be easily maintained for a long time.

The average fiber diameter of the mixed-fiber nonwoven fabric constituting the pre-filtration layer in the present invention may be 20 $\mu$m or less and 1 $\mu$m or more, preferably 15 $\mu$m or less and 1 $\mu$m or more, and more preferably 12 $\mu$m or less and 1 $\mu$m or more. In the case of the average fiber diameter being 1 $\mu$m or more, pressure loss does not become excessive compared to filtration precision, and in the case of 20 $\mu$m or less, huge particles may be trapped in the pre-filtration layer. Moreover, the average basis weight may be 10 to 100 g/m$^2$, preferably 20 to 80 g/m$^2$, and more preferably 30 to 60 g/m$^2$. In the case of the average basis weight being 10 g/m$^2$ or more, sufficient rigidity may be provided to the pre-filtration layer, and in the case of 100 g/m$^2$ or less, sufficient heating to the inside of the nonwoven fabric becomes possible during heat treatment.

The average fiber diameter of the mixed-fiber nonwoven fabric constituting the precision filtration layer in the present invention may be 0.1 $\mu$m or more and less than 1 $\mu$m, preferably 0.2 $\mu$m or more and 0.8 $\mu$m or less, and more preferably 0.3 $\mu$m or more and 0.7 $\mu$m or less. In the case of the average fiber diameter being 0.1 $\mu$m or more, the fiber strength of the precision filtration layer may be sufficiently maintained, and in the case of less than 1 $\mu$m, particles of the required size may be trapped in the precision filtration layer. The average basis weight may be 1 to 40 g/m$^2$, preferably 3 to 30 g/m$^2$, and more preferably 5 to 20 g/m$^2$. In the case of the average basis weight being 1 g/m$^2$ or more, the necessary load may be applied in the subsequent winding process, and in the case of 40 g/m$^2$ or less, it is possible to avoid fly generation during melt-blowing that would make the basis weight of the nonwoven fabric unstable.

The thermoplastic resin A in the present invention is not particularly limited, and examples include polypropylene, propylene copolymer (for example, binary or ternary copolymers with propylene as the main component and ethylene, butene-1, 4-methylpentene, etc.), polyester, polyethylene, polyamide, and low-melting-point copolymerized polyester. Polypropylene, polyester, polyethylene, polyamide, and copolymers thereof are preferred because the melt viscosity may be easily adjusted to an optimal value according to temperature, and polypropylene is particularly preferred in terms of having good chemical resistance.

In particular, in the case of using polypropylene as the thermoplastic resin A, it is preferred that the melt flow rate is 500 g/10 min or more and the melting point is 160°C or more, and it is more preferred that the melt flow rate is 600 g/10 min or more and the melting point is 160°C or more. Moreover, in the case of the polypropylene being polypropylene polymerized from a metallocene catalyst, it is preferred because the molecular weight distribution is narrow, resulting in less variation in fiber diameter, good spinnability, and excellent processability.

The thermoplastic resin B in the present invention is not particularly limited as long as it has a lower melting point than the thermoplastic resin A, and examples include polypropylene, propylene copolymer (for example, binary or ternary copolymers with propylene as the main component and ethylene, butene-1, 4-methylpentene, etc.), polyester, polyethylene, polyamide, and low-melting-point copolymerized polyester. From the viewpoint of imparting pressure resistance to the depth filter, a propylene copolymer is preferred. Further, the melting point of the thermoplastic resin B is not particularly limited, but is preferably 150°C or less.

The combination of thermoplastic resin B and thermoplastic resin A is not particularly limited, and examples include polyethylene/polypropylene, propylene copolymer/polypropylene, low-melting-point copolymerized polyester/polyester, and polyethylene/polyester. Among these, the combinations of propylene copolymer/polypropylene and low-melting-point copolymerized polyester/polyester are preferred because the bonding force between fibers by heat treatment is strong and filters with high strength may be obtained.

The mixed-fiber nonwoven fabric in the present invention may be produced by forming thermoplastic resin A and thermoplastic resin B into melt-blown fiber A and melt-blown fiber B, respectively, by the melt-blown method, and mixing these fibers to form a mixed-fiber nonwoven fabric. In this way, since the melt-blown fiber A and the melt-blown fiber B having different melting points are used, the nonwoven fabric after spinning is heated by air-through method heat treatment or far-infrared heater at a temperature equal to or higher than the melting point of the melt-blown fiber B having a lower melting point, and the melt-blown fiber B is thermally melted, whereby the fibers are thermally bonded to each other and strong inter-fiber voids are formed, so that there is no collapse (compaction) of the filter medium due to increased filtration pressure. Thus, even in the case of the amount of trapped filtrate increasing over time, compaction does not occur, and filtration is possible under conditions of relatively gentle pressure increase for a relatively long time.

Heat treatment of the web by the air-through method using hot air is a method for obtaining a nonwoven fabric uniform in the thickness direction by enhancing the adhesive effect through suction of one side of the web after passing the web through an oven by a conveyor belt or rotary drum in the oven. The difference in melting point may be 10°C or more, preferably 15°C or more, more preferably 20°C or more, and particularly preferably 25°C or more.

The content of the melt-blown fiber B in the mixed-fiber nonwoven fabric is not particularly limited, and is preferably 10 to 90% by weight, more preferably 20 to 70% by weight, and even more preferably 30 to 50% by weight, based on the total weight of the mixed-fiber nonwoven fabric. In the case of the content of the melt-blown fiber B being 10% by weight or more, the thermal bonding points of the fibers do not decrease even according to heat treatment of the fiber web, fuzziness is reduced, and strength may be increased. In the case of the content of the melt-blown fiber B being 90% by weight or less, the low-melting-point resin that has lost its fiber form due to heat treatment is less likely to partially block inter-fiber voids or cause pore diameter expansion, making it less likely to cause deterioration of the filtration capability of the filter. In particular, in the case of the content of the melt-blown fiber B being 30 to 50% by weight, the filter may have excellent strength and shape retention when molded into a filter.

The average fiber diameter of the single-fiber nonwoven fabric in the present invention may be 0.1 $\mu$m or more and less than 1 $\mu$m, preferably 0.2 $\mu$m or more and 0.8 $\mu$m or less, and more preferably 0.3 $\mu$m or more and 0.7 $\mu$m or less. In the case of the average fiber diameter being 0.1 $\mu$m or more, fine particles may be trapped while suppressing an increase in pressure drop, and in the case of the fiber diameter being less than 1 $\mu$m, particles of necessary size may be trapped while ensuring high liquid permeability.

The coefficient of variation of fiber diameter of the single-fiber nonwoven fabric in the present invention may be 3.0 or less, preferably 0.1 to 2.0, and more preferably 0.2 to 1.0. In the case of the coefficient of variation of fiber diameter being 0.1 or more, the single-fiber nonwoven fabric may be manufactured stably and at low cost, and in the case of being 3.0 or less, high particle trapping performance or classification performance may be expected.

The average basis weight of the single-fiber nonwoven fabric may be 1 to 100 g/m$^2$, preferably 3 to 80 g/m$^2$, and more preferably 5 to 70 g/m$^2$. In the case of the basis weight being 1 g/m$^2$ or more, workability becomes favorable when inserting the single-fiber nonwoven fabric C into the precision filtration layer, and in the case of the basis weight being 100 g/m$^2$ or less, both high trapping capability for fine particles and pressure drop as a filter may be achieved.

The resin forming the single-fiber nonwoven fabric C is not particularly limited, but examples include polyolefin resins such as polypropylene, polyethylene, polymethylpentene, and cyclic olefin copolymer, polyester, polyamide, and the like. From the viewpoint of making the fiber diameter fine and uniform, polypropylene is preferred.

In particular, in the case of using polypropylene for the single-fiber nonwoven fabric C, the polypropylene preferably has a melt flow rate of 500 g/10 min or more and a melting point of 160°C or more, and more preferably has a melt flow rate of 600 g/10 min or more and a melting point of 160°C or more. In the case of the polypropylene being polypropylene polymerized from a metallocene catalyst, it is preferred because it has a narrow molecular weight distribution, resulting in less variation in fiber diameter, good spinnability, and excellent processability.

Such single-fiber nonwoven fabric is not particularly limited, but may be manufactured by the melt-blown method, or examples include those commercially available as Syntex Nano manufactured by Mitsui Chemicals (specific product name: nano2).

The single-fiber nonwoven fabric in the present invention may be a single-layer nonwoven fabric or a laminate of two or more layers. The laminated state of the single-fiber nonwoven fabric is not particularly limited, but is preferably in a state of being adhered to such an extent that each layer may be peeled off without breaking. By achieving such an adhered state, both high trapping capability for fine particles and pressure drop as a filter may be achieved.

The depth filter of the present invention only needs to have at least a part of the above-described single-fiber nonwoven fabric wound to overlap with the mixed-fiber nonwoven fabric constituting the precision filtration layer, but it is preferred that the single-fiber nonwoven fabric and the mixed-fiber nonwoven fabric constituting the precision filtration layer are thermally bonded between the wound layers. By having such a structure, it becomes possible to firmly trap fine particles even under high pressure conditions.

It is noted that as long as at least a part of the single-fiber nonwoven fabric is wound to overlap with the mixed-fiber nonwoven fabric constituting the precision filtration layer (as long as it covers the precision filtration layer), a part of the single-fiber nonwoven fabric may cover the pre-filtration layer or the support layer, but from the viewpoint of filtration life and filtration precision, it is preferred that it covers the downstream side of the precision filtration layer.

In the depth filter of the present invention, in the case of using composite fibers, the form thereof is not particularly limited, but composite forms such as concentric sheath-core type, eccentric sheath-core type, side-by-side type, sea-island type, radial type, and the like may be adopted. Particularly, eccentric sheath-core type composite fibers are suitable for providing bulkiness.

The depth filter of the present invention is not particularly limited, but may include a support layer provided on the downstream side of the precision filtration layer. As the nonwoven fabric constituting the support layer, the same nonwoven fabric as that constituting the pre-filtration layer may be used, or a fiber assembly with even greater strength such as spunbond nonwoven fabric may be used.

<Method for manufacturing depth filter>

The depth filter of the present invention having the above-described structure may be formed by winding melt-blown nonwoven fabric spun by the melt-blown method onto a cylindrical iron rod while thermally bonding by air-through method heat treatment or far-infrared heaters. The melt-blown method is a method for obtaining ultrafine fiber webs by spraying molten thermoplastic resin extruded from spinning holes in the machine direction or length direction onto a collection conveyor net or rotating core material (hollow mandrel) with high-temperature, high-speed gas blown from around the spinning holes. At this time, by continuously changing spinning conditions such as the amount of resin discharged from the spinning holes (discharge rate) and/or the jet velocity of the blowing airflow (or hot air pressure), desired changes in fiber diameter and basis weight may be imparted from the pre-filtration layer to the precision filtration layer.

In the melt-blown method, by increasing the discharge rate and lowering the hot air pressure, fibers may be made thicker and the basis weight may be increased.

In the process from the pre-filtration layer to the precision filtration layer, fibers may be gradually made thinner by gradually increasing the hot air pressure, and preferably, by gradually decreasing the discharge rate while simultaneously increasing the hot air pressure, fibers may be gradually made thinner and the basis weight of the nonwoven fabric may be lowered. In the precision filtration layer, the hot air pressure and/or the discharge rate may be gradually changed so that the fiber diameter gradually decreases from the upstream side toward the downstream side, but by keeping the hot air pressure and discharge rate constant, portions where the fiber diameter and basis weight become constant may be provided. At this time, the structure of the depth filter of the present invention may be obtained by inserting the single-fiber nonwoven fabric to overlap with the mixed-fiber nonwoven fabric constituting the precision filtration layer.

It is noted that from the precision filtration layer to the support layer, although not particularly limited, fibers may be made thicker and the basis weight may be increased by lowering the hot air pressure and increasing the discharge rate. In the support layer, the hot air pressure and the discharge rate may also be kept constant for a while.

In the above method, the temperature of the cylindrical iron rod may be any temperature at which the melt-blown fiber B melts and is thermally bonded. Further, the degree of bonding between and within layers of the single-fiber nonwoven fabric, as well as between layers of the single-fiber nonwoven fabric and the mixed-fiber nonwoven fabric, may be appropriately controlled by changing heat treatment conditions such as air-through. Further, although the speed of the manufacturing line is not particularly limited, during formation of the filtration layer, the tension applied to the nonwoven fabric is preferably 10 N/m or less, and winding without applying tension is more preferable.

The diameter and thickness of the depth filter of the present invention may be appropriately set according to the target performance and properties of the filtrate. For example, in the case of a depth filter used for slurry filtration in the manufacturing process of CMP slurry, the inner diameter is preferably about 23 to 100 mm. By setting the inner diameter to 23 mm or more, a sufficient amount of liquid flowing to the inner wall side may be secured. By setting the inner diameter to 100 mm or less, the depth filter may be made compact. Further, the thickness (= (outer diameter - inner diameter) ÷ 2) is preferably 10 to 30 mm. By setting the thickness to 10 mm or more, a sufficient change ratio of the average fiber diameter and the average basis weight may be provided. By setting the thickness to 30 mm or less, a depth filter with excellent liquid permeability may be achieved.

The depth filter manufactured as described above is suitably used as a cylindrical depth filter by cutting it to an appropriate size and attaching end caps to both ends. Further, it may also be used by enclosing it in a small capsule or the like.

Further, the above manufacturing method is only an overview, and in addition to the above processes, known processes such as heat treatment, cooling, chemical treatment, molding, washing, and the like may be performed as necessary.

Example

Hereinafter, the present invention will be described in detail by examples, but the present invention is not limited thereto. The measurement methods or definitions of physical property values shown in the examples are described below.

1) Measurement method of average fiber diameter and coefficient of variation of fiber diameter

From the cross-section of the filter photographed by an electron microscope, the lengths (diameters) of 100 fibers in the longitudinal direction and the perpendicular direction were measured, and the arithmetic mean value was calculated, which was defined as the average fiber diameter. Further, the standard deviation of the diameters of 100 fibers was calculated, and the value obtained by dividing the standard deviation by the average fiber diameter was defined as the coefficient of variation of fiber diameter. This calculation was performed using the image processing software "Scion Image" (trade name) from Scion Corporation.

It is noted that in the fiber diameter measurement by electron microscope, fibers are selected as randomly as possible, but errors may occur.

2) Measurement method of average basis weight

For the nonwoven fabric obtained by spinning, measurement samples cut into circular shapes of 100 $cm^2$ were collected at three points in the width direction (left side, center, right side), and the weight of each was measured to determine the weight per unit area $(g/m^2)$, with the arithmetic mean value taken as the basis weight.

3) Melt flow rate (MFR) of resin

According to the method of JIS K 7210-1:2014, measurement was performed using a standard die under conditions of temperature 230°C and load 2.16 kg.

4) Melting point of thermoplastic resin

Using a differential scanning calorimeter (DSC8500) manufactured by PerkinElmer Japan, the temperature corresponding to the peak on the melting absorption curve obtained when the thermoplastic resin was heated at 10°C/min was taken as the melting point of the resin.

[Example 1]

As the thermoplastic resin A, MF650Y (manufactured by PolyMirae Co., Ltd., MFR; 1800 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

With the spinning temperature set at 370°C, the pressure of blowing air at temperature 400°C was continuously changed from an initial 11.8 kPa to a maximum of 31.7 kPa, and simultaneously, with the weight ratio of the above two resins set at 5:5, spinning was performed under conditions where the discharge rate was changed from 234 g/min to 40 g/min, sprayed onto a conveyor net equipped with a suction device, and wound onto a paper tube roll at 6.5 m/min to obtain a mixed-fiber nonwoven fabric.

At this time, when webs corresponding to the pre-filtration layer and the precision filtration layer portions were collected, the average fiber diameter of the portion that becomes the most upstream side of the pre-filtration layer was 9.9 $\mu$m with an average basis weight of 54.0 g/m$^2$, and the average fiber diameter of the portion that becomes the most downstream side of the precision filtration layer was 0.66 $\mu$m with an average basis weight of 16.8 g/m$^2$.

Next, the mixed-fiber nonwoven fabric was heated in a through-air processing machine under conditions of conveyor speed 8.5 m/min and set temperature 132°C, and immediately thereafter, a cylindrical molded product was produced by winding the web for use in the precision filtration layer and the web for use in the pre-filtration layer sequentially onto a core material (iron rod) with an outer diameter of 30 mm. At this time, at the most downstream side of the precision filtration layer, three layers of nano2 manufactured by Mitsui Chemicals (average fiber diameter: 0.6 $\mu$m, coefficient of variation of fiber diameter: 0.88, basis weight: 10 g/m$^2$) were inserted with a length of 600 mm.

The obtained cylindrical molded product was allowed to cool at room temperature, removed from the core material, and two ends were cut to form a cylindrical shape with a total length of 245 mm, outer diameter of 68 mm, and inner diameter of 30 mm. Two ends were sealed with flat gaskets (polyethylene foam with a foaming ratio of 3 times and thickness of 3 mm cut into a donut shape), and the total length was set to 250 mm. Next, the flat gaskets and filter were integrated by thermal bonding to produce a depth filter.

[Example 2]

As the thermoplastic resin A, Achieve 6936G2 (manufactured by Exxon Mobil Corporation, MFR; 1500 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

With the spinning temperature set at 370°C, the pressure of blowing air at temperature 400°C was continuously changed from an initial 12.5 kPa to a maximum of 33.1 kPa, and simultaneously, with the weight ratio of the above two resins set at 5:5, spinning was performed under conditions where the discharge rate was changed from 234 g/min to 41 g/min, sprayed onto a conveyor net equipped with a suction device, and wound onto a paper tube roll at 6.5 m/min to obtain a mixed-fiber nonwoven fabric.

At this time, when the mixed-fiber nonwoven fabric portions corresponding to the pre-filtration layer and the precision filtration layer were collected, the average fiber diameter of the portion that becomes the most upstream side of the pre-filtration layer was 10.2 $\mu$m with an average basis weight of 54.5 g/m$^2$, and the average fiber diameter of the portion that becomes the most downstream side of the precision filtration layer was 0.68 $\mu$m with an average basis weight of 16.2 g/m$^2$.

Next, the mixed-fiber nonwoven fabric was heated in a through-air processing machine under conditions of conveyor speed 8.5 m/min and set temperature 132°C, and immediately thereafter, a cylindrical molded product was produced by winding the web for use in the precision filtration layer and the web for use in the pre-filtration layer sequentially onto a core material (iron rod) with an outer diameter of 30 mm. At this time, at the most downstream side of the precision filtration layer, three layers of nano2 manufactured by Mitsui Chemicals (average fiber diameter: 0.6 $\mu$m, coefficient of variation of fiber diameter: 0.88, basis weight: 10 g/m$^2$) were inserted with a length of 600 mm.

Next, a depth filter was produced in the same manner as in Example 1.

[Example 3]

As the thermoplastic resin A, MF650Z (manufactured by PolyMirae Co., Ltd., MFR; 2300 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

With the spinning temperature set at 360°C, the pressure of blowing air at temperature 400°C was continuously changed from an initial 11.9 kPa to a maximum of 32.3 kPa, and simultaneously, with the weight ratio of the above two resins set at 5:5, spinning was performed under conditions where the discharge rate was changed from 236 g/min to 41 g/min, sprayed onto a conveyor net equipped with a suction device, and wound onto a paper tube roll at 6.5 m/min to obtain a mixed-fiber nonwoven fabric.

At this time, when the mixed-fiber nonwoven fabric portions corresponding to the pre-filtration layer and the precision filtration layer were collected, the average fiber diameter of the portion that becomes the most upstream side of the pre-filtration layer was 8.9 $\mu$m with an average basis weight of 53.8 g/m$^2$, and the average fiber diameter of the portion that becomes the most downstream side of the precision filtration layer was 0.68 $\mu$m with an average basis weight of 16.7 g/m$^2$.

Next, the mixed-fiber nonwoven fabric was heated in a through-air processing machine under conditions of conveyor speed 8.5 m/min and set temperature 132°C, and immediately thereafter, a cylindrical molded product was produced by winding the web for use in the precision filtration layer and the web for use in the pre-filtration layer sequentially onto a core material (iron rod) with an outer diameter of 30 mm. At this time, at the most downstream side of the precision filtration layer, three layers of nano2 manufactured by Mitsui Chemicals (average fiber diameter: 0.6 $\mu$m, coefficient of variation of fiber diameter: 0.88, basis weight: 10 g/m$^2$) were inserted with a length of 600 mm.

Next, a depth filter was produced in the same manner as in Example 1.

[Example 4]

As the thermoplastic resin A, MF650X (manufactured by PolyMirae Co., Ltd., MFR; 1200 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

With the spinning temperature set at 370°C, the pressure of blowing air at temperature 400°C was continuously changed from an initial 13.9 kPa to a maximum of 33.1 kPa, and simultaneously, with the weight ratio of the above two resins set at 5:5, spinning was performed under conditions where the discharge rate was changed from 233 g/min to 42 g/min, sprayed onto a conveyor net equipped with a suction device, and wound onto a paper tube roll at 6.5 m/min to obtain a mixed-fiber nonwoven fabric.

At this time, when the mixed-fiber nonwoven fabric portions corresponding to the pre-filtration layer and the precision filtration layer were collected, the average fiber diameter of the portion that becomes the most upstream side of the pre-filtration layer was 11.5 $\mu$m with an average basis weight of 55.5 g/m$^2$, and the average fiber diameter of the portion that becomes the most downstream side of the precision filtration layer was 0.71 $\mu$m with an average basis weight of 17.1 g/m$^2$.

Next, the mixed-fiber nonwoven fabric was heated in a through-air processing machine under conditions of conveyor speed 8.5 m/min and set temperature 132°C, and immediately thereafter, a cylindrical molded product was produced by winding the web for use in the precision filtration layer and the web for use in the pre-filtration layer sequentially onto a core material (iron rod) with an outer diameter of 30 mm. At this time, at the most downstream side of the precision filtration layer, four layers of nano2 manufactured by Mitsui Chemicals (average fiber diameter: 0.6 $\mu$m, coefficient of variation of fiber diameter: 0.88, basis weight: 10 g/m$^2$) were inserted with a length of 600 mm.

Next, a depth filter was produced in the same manner as in Example 1.

[Example 5]

As the thermoplastic resin A, MF650Y (manufactured by PolyMirae Co., Ltd., MFR; 1200 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

With the spinning temperature set at 360°C, the pressure of blowing air at temperature 400°C was continuously changed from an initial 16.4 kPa to a maximum of 31.8 kPa, and simultaneously, with the weight ratio of the above two resins set at 5:5, spinning was performed under conditions where the discharge rate was changed from 233 g/min to 42 g/min, sprayed onto a conveyor net equipped with a suction device, and wound onto a paper tube roll at 6.5 m/min to obtain a mixed-fiber nonwoven fabric.

At this time, when the mixed-fiber nonwoven fabric portions corresponding to the pre-filtration layer and the precision filtration layer were collected, the average fiber diameter of the portion that becomes the most upstream side of the pre-filtration layer was 8.6 $\mu$m with an average basis weight of 55.7 g/m$^2$, and the average fiber diameter of the portion that becomes the most downstream side of the precision filtration layer was 0.64 $\mu$m with an average basis weight of 16.4 g/m$^2$.

Next, the mixed-fiber nonwoven fabric was heated in a through-air processing machine under conditions of a conveyor speed of 8.5 m/min and a set temperature of 132°C, and immediately thereafter, a cylindrical molded product was produced by winding the mixed-fiber nonwoven fabric for use in the precision filtration layer and the mixed-fiber nonwoven fabric for use in the pre-filtration layer sequentially onto a core material (iron rod) with an outer diameter of 30 mm. At this time, at the most downstream side of the precision filtration layer, one layer of nano2 manufactured by Mitsui Chemicals (average fiber diameter: 0.6 μm, coefficient of variation of fiber diameter: 0.88, basis weight: 10 g/m²) was inserted with a length of 1800 mm.

Next, a depth filter was produced in the same manner as in Example 1.

[Comparative Example 1]

Profile II cartridge grade 003 (manufactured by Nihon Pall Corporation) was used.

[Comparative Example 2]

As the thermoplastic resin A, SA08A (manufactured by Japan Polypropylene Corporation, MFR; 80 g/10 min, melting point; 165°C) was used, and as the thermoplastic resin B, SOW0279 (manufactured by Japan Polypropylene Corporation, MFR; 60 g/10 min, melting point; 140°C) was used.

As a nozzle for melt-blown processing, a melt-blown spinning nozzle with a total of 501 holes was used, in which spinning holes for high-melting-point resin discharge and spinning holes for low-melting-point resin discharge, each having a hole diameter of 0.2 mm, were alternately arranged in a single row.

Spinning was performed by setting the spinning temperature to 360°C, continuously changing the blowing air flow rate at a temperature of 400°C from an initial 5.2 Nm³/min to a maximum of 27 Nm³/min, setting the weight ratio of the above two resins to 5:5, and maintaining the discharge rate at 109 g/min. The spun fibers were sprayed onto a conveyor net equipped with a suction device and wound onto a paper tube roll at 7.5 m/min to obtain a mixed-fiber nonwoven fabric. At this time, when the mixed-fiber nonwoven fabric portions corresponding to the pre-filtration layer and the precision filtration layer were collected, the average fiber diameter of the portion that becomes the most upstream side of the pre-filtration layer was 15.0 μm, the average fiber diameter of the portion that becomes the most downstream side of the precision filtration layer was 2.00 μm, and the average basis weight was 50 g/m² for both.

Next, the mixed-fiber nonwoven fabric was heated in a through-air processing machine under conditions of a conveyor speed of 8.5 m/min and a set temperature of 137°C, and immediately thereafter, a cylindrical molded product was produced by winding the mixed-fiber nonwoven fabric for use in the precision filtration layer and the mixed-fiber nonwoven fabric for use in the pre-filtration layer sequentially onto a core material (iron rod) with an outer diameter of 30 mm. At this time, at the most downstream side of the precision filtration layer, a single-fiber nonwoven fabric (average fiber diameter: 1.0 μm, basis weight: 75 g/m²) was inserted at a length of 600 mm. Next, the mixed-fiber nonwoven fabric was heated in a through-air processing machine under conditions of conveyor speed 8.5 m/min and set temperature 132°C, and immediately thereafter, a cylindrical molded product was produced by winding the web for use in the precision filtration layer and the web for use in the pre-filtration layer sequentially onto a core material (iron rod) with an outer diameter of 30 mm. At this time, at the most downstream side of the precision filtration layer, four layers of nano2 manufactured by Mitsui Chemicals (average fiber diameter: 0.6 μm, coefficient of variation of fiber diameter: 0.88, basis weight: 10 g/m²) were inserted with a length of 600 mm.

Next, a depth filter was produced in the same manner as Example 1, except that a hot melt adhesive was used for bonding the flat gasket and the filter.

Evaluation of the depth filters obtained in Examples 1 to 5 and Comparative Examples 1 to 2 was performed. Each evaluation method and results are shown below.

<Liquid permeability>

First, water was passed through without mounting a filter in the filter housing, and the relationship between the water flow rate and pressure loss before and after the housing was determined, with this value taken as the piping resistance. Next, the test filter was mounted in the filter housing, and the water flow rate and pressure loss before and after the housing were determined, with this value taken as the provisional pressure loss. Then, the value obtained by subtracting the piping resistance from the provisional pressure loss was taken as the true differential pressure of the test specimen. Water flow was conducted at flow rates of 10 L/min, 20 L/min, and 30 L/min. The results are shown in Table 1.

[Table 1]

|  | Water flow rate (L/min) | | |
| --- | --- | --- | --- |
|  | 10 | 20 | 30 |
| Example 1 | 70 | 159 | 247 |
| Example 2 | 68 | 154 | 240 |

(continued)

|  | Water flow rate (L/min) | | |
|---|---|---|---|
|  | 10 | 20 | 30 |
| Example 3 | 69 | 156 | 243 |
| Example 4 | 76 | 169 | 261 |
| Example 5 | 72 | 162 | 251 |
| Comparative Example 1 | 90 | 197 | - |
| Comparative Example 2 | 40 | 92 | 148 |

<Filtration performance evaluation>

The test powder used was AC dust Fine (ACFTD: abbreviation for Air Cleaner Fine Test Dust, fine particles manufactured from desert sand) obtained from The Association of Powder Process Industry and Engineering, JAPAN. The filter was mounted in a filtration test machine and water was passed through at a rate of 10 L/min for 30 minutes.

30 L of pure water was placed in the tank of the filtration test machine, and while stirring with a stirring blade, ACFTD was continuously added at a rate of 0.2 g/min, and the liquid was passed through the filtration test machine equipped with the filter at a rate of 10 L/min. The liquid flow and ACFTD addition were performed until the differential pressure between the inlet pressure and outlet pressure reached 230 kPa, and during this time, fluid was collected from the filter inlet side and outlet side as needed, and this was used as samples.

For the obtained samples, the particle count before and after the filter at each test time was measured using Accusizer 780APS (manufactured by PSS Japan Co., Ltd.).

The collection efficiency was determined by the following definition formula. The results are shown in Table 2.

Collection efficiency (%) = (1 - particle count of 0.51 $\mu$m particle diameter after filter passage/ particle count of 0.51 $\mu$m particle diameter before filter passage) $\times$ 100

[Table 2]

| | | | | | | | | | | | | |
|---|---|---|---|---|---|---|---|---|---|---|---|---|
| Example 1 | Test time (min) | 5 | 10 | 15 | 20 | 25 | 30 | 45 | 51 | 57 | 62 |
| | Collection efficiency (%) | 99.7 | 99.8 | 99.9 | 99.7 | 99.9 | 99.9 | 99.8 | 99.7 | 99.7 | 99.7 |
| | Differential pressure (kPa·s) | 70 | 70 | 70 | 71 | 85 | 115 | 150 | 170 | 200 | 230 |
| Example 2 | Test time (min) | 5 | 10 | 15 | 20 | 25 | 30 | 47 | 53 | 60 | 63 |
| | Collection efficiency (%) | 99.5 | 99.5 | 99.4 | 99.4 | 99.6 | 99.8 | 99.8 | 99.7 | 99.7 | 99.7 |
| | Differential pressure (kPa·s) | 67 | 67 | 67 | 68 | 81 | 108 | 147 | 165 | 200 | 230 |
| Example 3 | Test time (min) | 5 | 10 | 15 | 20 | 25 | 30 | 45 | 52 | 58 | 61 |
| | Collection efficiency (%) | 99.6 | 99.6 | 99.5 | 99.5 | 99.7 | 99.7 | 99.8 | 99.8 | 99.8 | 99.7 |
| | Differential pressure (kPa·s) | 68 | 68 | 68 | 69 | 82 | 115 | 150 | 170 | 200 | 230 |
| Example 4 | Test time (min) | 5 | 10 | 15 | 20 | 25 | 30 | 50 | 55 | 61 | 63 |
| | Collection efficiency (%) | 99.9 | 99.9 | 99.9 | 99.9 | 99.8 | 99.9 | 99.9 | 99.9 | 99.9 | 99.9 |
| | Differential pressure (kPa·s) | 74 | 74 | 74 | 74 | 76 | 106 | 150 | 170 | 200 | 230 |
| Example 5 | Test time (min) | 5 | 10 | 15 | 20 | 25 | 30 | 45 | 50 | 55 | 60 |
| | Collection efficiency (%) | 99.8 | 99.8 | 99.8 | 99.7 | 99.8 | 99.9 | 99.9 | 99.9 | 99.9 | 99.9 |
| | Differential pressure (kPa·s) | 72 | 72 | 72 | 73 | 88 | 120 | 155 | 170 | 200 | 230 |
| Comparative Example 1 | Test time (min) | 5 | 10 | 15 | 20 | 25 | 30 | 40 | 45 | 48 | 50 |
| | Collection efficiency (%) | 99.1 | 99.1 | 98.9 | 98.9 | 98.9 | 99 | 98.7 | 98.7 | - | 82.2 |
| | Differential pressure (kPa·s) | 85 | 85 | 85 | 85 | 85 | 91 | 150 | 200 | 222 | 215 |

(continued)

| Comparative Example 2 | Test time (min) | 5 | 10 | 15 | 20 | 30 | 38 | 43 | 48 | | |
|---|---|---|---|---|---|---|---|---|---|---|---|
| | Collection efficiency (%) | 80.8 | 79.8 | 81.2 | 87.7 | 96.1 | 97.3 | 97.9 | 98.1 | | |
| | Differential pressure (kPa·s) | 38 | 41 | 45 | 53 | 80 | 150 | 200 | 230 | | |

From the results in Table 1, it was found that the depth filter of the present invention may pass water at lower pressure than Comparative Example 1.

From the results in Table 2, it was found that the depth filter of the present invention has higher collection efficiency than Comparative Examples 1 and 2. Furthermore, the depth filter of the present invention maintained high collection efficiency even at a filtration pressure of 230 kPa. As a result, long-term filtration was possible.

Further, Comparative Example 1 had a collection efficiency of 98% or higher up to a differential pressure of about 200 kPa, but it decreased immediately after the differential pressure reached 220 kPa, and the collection efficiency at that time was measured to be 82.2%, which was a low value. This is considered to be because the pores of the filter medium were pushed open by the pressure, causing fine particles to leak out.

From the above results, it was found that the depth filter of the present invention has high liquid permeability, is difficult to clog even in the case of continuously adding fine particles with a wide particle distribution including coarse particles, and may filter particles larger than the particle diameter to be removed during filtration with a high collection efficiency of 99% or higher over a long period of time. It was also confirmed that there is no leakage of fine particles even in the case of high filtration pressure.

Industrial Applicability

The depth filter of the present invention may be suitably used as a filter for filtering fluid containing fine particles.

**Claims**

1. A depth filter, which is a cylindrical depth filter comprising a pre-filtration layer and a precision filtration layer disposed on a downstream side in a filtration direction of the pre-filtration layer,

   wherein the depth filter is formed by winding a mixed-fiber nonwoven fabric composed of a melt-blown fiber A made of a thermoplastic resin A and a melt-blown fiber B made of a thermoplastic resin B having a melting point lower than the thermoplastic resin A, and a single-fiber nonwoven fabric having an average fiber diameter of less than 1 $\mu$m and 0.1 $\mu$m or more, and a coefficient of variation of fiber diameter of 3.0 or less,
   the pre-filtration layer is a layer in which the mixed-fiber nonwoven fabric having an average fiber diameter of 20 $\mu$m or less and 1 $\mu$m or more is wound,
   the precision filtration layer is a layer in which the mixed-fiber nonwoven fabric having an average fiber diameter of less than 1 $\mu$m and 0.1 $\mu$m or more is wound,
   a gradient is provided in which an average fiber diameter of the mixed-fiber nonwoven fabric continuously decreases from the pre-filtration layer toward the precision filtration layer, and
   at least a part of the single-fiber nonwoven fabric is wound to overlap with a mixed-fiber nonwoven fabric constituting the precision filtration layer.

2. The depth filter according to claim 1, wherein a gradient is provided in which an average basis weight of the mixed-fiber nonwoven fabric continuously decreases in a range from 100 g/m$^2$ to 1 g/m$^2$ from the pre-filtration layer toward the precision filtration layer.

3. The depth filter according to claim 1 or 2, wherein a support layer is provided that is formed by continuously increasing an average fiber diameter and increasing an average basis weight toward an inner peripheral portion beyond a precision filtration layer.

4. The depth filter according to claim 1 or 2, wherein the mixed-fiber nonwoven fabric is thermally bonded between layers that are wound.

5. The depth filter according to claim 1 or 2, comprising a mixed-fiber nonwoven fabric having an average basis weight of 20 g/m$^2$ or less.

6. The depth filter according to claim 1 or 2, wherein the thermoplastic resin A is polypropylene having a melt flow rate of 500 g/10 min or more and a melting point of 160°C or more, and the thermoplastic resin B has a melting point of 150°C or less.

7. The depth filter according to claim 6, wherein the thermoplastic resin B is a propylene copolymer.

8. The depth filter according to claim 7, wherein the polypropylene is polypropylene polymerized from a metallocene catalyst.

9. The depth filter according to claim 1 or 2, wherein the single-fiber nonwoven fabric is a laminate of two or more layers.

**EP 4 684 862 A1**

## INTERNATIONAL SEARCH REPORT

| International application No. |
|---|
| **PCT/JP2024/000289** |

| A. | CLASSIFICATION OF SUBJECT MATTER |
|---|---|

*B01D 39/16*(2006.01)i; *D04H 3/14*(2012.01)i; *D04H 3/153*(2012.01)i; *D04H 3/16*(2006.01)i
FI: B01D39/16 A; D04H3/16; D04H3/14; D04H3/153

According to International Patent Classification (IPC) or to both national classification and IPC

| B. | FIELDS SEARCHED |
|---|---|

Minimum documentation searched (classification system followed by classification symbols)

B01D39/16; D04H3/14; D04H3/153; D04H3/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 7-82649 A (CHISSO CORPORATION) 28 March 1995 (1995-03-28)<br>paragraphs [0014], [0027]-[0029] | 1-9 |
| Y | WO 2020/066767 A1 (JNC CORP.) 02 April 2020 (2020-04-02)<br>paragraphs [0021]-[0022], [0049] | 1-9 |
| Y | JP 2020-104036 A (JNC CORP.) 09 July 2020 (2020-07-09)<br>paragraphs [0030]-[0031] | 3 |
| Y | JP 2008-75227 A (JAPAN VILENE CO., LTD.) 03 April 2008 (2008-04-03)<br>paragraphs [0023]-[0025] | 6-8 |
| A | WO 98/13123 A1 (CHISSO CORPORATION) 02 April 1998 (1998-04-02)<br>entire text, all drawings | 1-9 |
| A | WO 2021/220720 A1 (JNC CORP.) 04 November 2021 (2021-11-04)<br>entire text, all drawings | 1-9 |

✓ Further documents are listed in the continuation of Box C.     ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/000289**

| C. | DOCUMENTS CONSIDERED TO BE RELEVANT | |
|---|---|---|
| Category* | Citation of document, with indication, where appropriate, of the relevant passages | Relevant to claim No. |
| P, A | WO 2023/042493 A1 (JNC CORP.) 23 March 2023 (2023-03-23)<br>entire text | 1-9 |

Form PCT/ISA/210 (second sheet) (July 2022)

## INTERNATIONAL SEARCH REPORT
### Information on patent family members

International application No.

**PCT/JP2024/000289**

| Patent document cited in search report | | | Publication date (day/month/year) | Patent family member(s) | | | Publication date (day/month/year) |
|---|---|---|---|---|---|---|---|
| JP | 7-82649 | A | 28 March 1995 | US | 6230901 | B1 | |
| | | | | columns 12-13 | | | |
| | | | | EP | 634511 | A1 | |
| WO | 2020/066767 | A1 | 02 April 2020 | US | 2022/0096976 | A1 | |
| | | | | paragraphs [0032]-[0033], [0081]-[0084] | | | |
| | | | | EP | 3858457 | A1 | |
| | | | | KR | 10-2021-0055776 | A | |
| | | | | CN | 113039003 | A | |
| JP | 2020-104036 | A | 09 July 2020 | (Family: none) | | | |
| JP | 2008-75227 | A | 03 April 2008 | (Family: none) | | | |
| WO | 98/13123 | A1 | 02 April 1998 | US | 6749753 | B1 | |
| | | | | entire text, all drawings | | | |
| | | | | EP | 880988 | A1 | |
| | | | | CN | 1204971 | A | |
| | | | | KR | 10-0452179 | B1 | |
| WO | 2021/220720 | A1 | 04 November 2021 | US | 2023/0226473 | A1 | |
| | | | | entire text, all drawings | | | |
| | | | | EP | 4144427 | A1 | |
| | | | | CN | 115397540 | A | |
| WO | 2023/042493 | A1 | 23 March 2023 | (Family: none) | | | |

Form PCT/ISA/210 (patent family annex) (July 2022)

16

**EP 4 684 862 A1**

**Patent documents cited in the description**

- WO 1998013123 A